# EUROPEAN PATENT APPLICATION

(11) **EP 1 580 623 A2**
(43) Date of publication of application: **28.09.2005**
(21) Application number: 04026017.6
(22) Date of filing: 03.11.2004
(51) Int. Cl.: G03G 21/18, G06F 3/12, H04L 12/28

(54) **Image forming apparatus having an antenna for wireless communication**

(30) Priority: 22.03.2004 US 805307
(71) Applicant: KABUSHIKI KAISHA TOSHIBA, Tokyo 105-8001 (JP); Toshiba Tec Kabushiki Kaisha, Tokyo, 101-8442 (JP)
(72) Inventor: Nakayama, Fumiharu, Yokohama-shi, Kanagawa-ken (JP)
(74) Representative: Fuchs Mehler Weiss & Fritzsche

(57) **Abstract**

A digital multi-function peripheral (MFP) (1) is provided with a control board (7) that is disposed inside a rear surface of the MFP (1). A control unit (8) such as a main CPU for controlling the entirety of the MFP (1) and a wireless LAN module (9) are mounted on the control board (7). A main antenna (5) and a sub-antenna (6) are disposed on the rear surface of the MFP (1). The length of cables for connecting the wireless LAN module (9) and the main antenna (5) and for connecting the wireless LAN module (9) and the sub-antenna (6) is reduced to a minimum. Thereby, attenuation in energy is suppressed. In addition, the provision of the main antenna (5) and sub-antenna (6) suppresses degradation in radiation characteristics.

## Description

The present invention relates to an image forming apparatus that forms an image with a wireless communication function of, e.g. a wireless LAN, Bluetooth, etc.

A new type of digital multi-function peripheral (in which a copying machine, a facsimile and a printer, for instance, are integrated) is optionally equipped with a wireless LAN module, thereby to perform a wireless communication function. In recent years, Bluetooth, which is a short-distance wireless communication standard, has been developed. Such a digital multi-function peripheral can optionally support the Bluetooth standard.

There has been a demand for the advent of a digital multi-function peripheral with a built-in wireless communication function. There is such a problem, however, that the radiation characteristics of an antenna, which is provided on an outer casing of the digital multi-function peripheral, vary depending on the condition for installation of the antenna.

The object of an aspect of the present invention is to provide an image forming apparatus wherein the condition for installation of an antenna is optimized.

According to an aspect of the present invention, there is provided an image forming apparatus comprising: a main body of the image forming apparatus; a wireless LAN module that is provided inside a rear surface of the main body of the image forming apparatus; an antenna that is provided on the rear surface of the main body of the image forming apparatus; and a cable that connects the wireless LAN module and the antenna with a shortest distance.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an external structure of a digital multi-function peripheral according to an image forming apparatus of the present invention;
FIG. 2 shows an external structure of the digital multi-function peripheral, as viewed from the rear side thereof;
FIG. 3 shows an example of amounts of attenuation in relation to the length of a cable;
FIG. 4 shows an external appearance of an upper part of the digital multi-function peripheral, as viewed from the rear side;
FIG. 5 shows radiation characteristics of a main antenna;
FIG. 6 shows radiation characteristics of a sub-antenna; and
FIG. 7 shows an external appearance of the digital multi-function peripheral, as viewed from above.

Embodiments of the present invention will now be described with reference to the accompanying drawings.

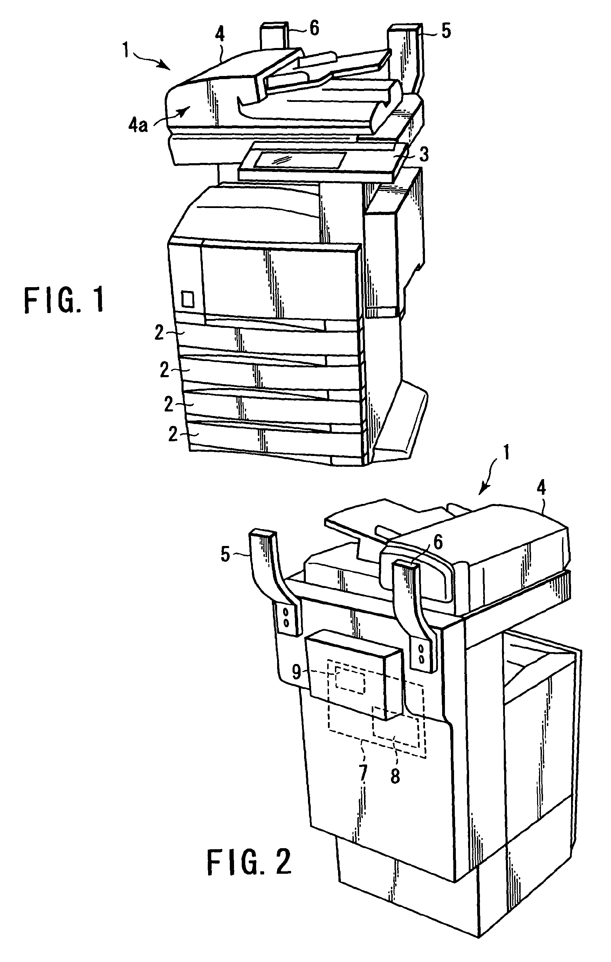

FIG. 1 shows an external structure of a digital multi-function peripheral (MFP) according to an image forming apparatus of the present invention. The MFP 1 includes a plurality of sheet feed cassettes 2, which is provided at a lower front part of the MFP 1, and an operation panel 3, which is provided at a upper front part of the MFP 1. Further, a reversing automatic document feeder (RADF) 4 is mounted on top of the MFP 1.

FIG. 2 shows an external structure of the rear side of the MFP 1 shown in FIG. 1. The rear side of the MFP 1 is provided with a main antenna 5 and a sub-antenna 6, as will be described later in detail. Each of the main antenna 5 and sub-antenna 6 comprises, for instance, a dual-band antenna.

As is indicated by broken lines in FIG. 2, a control board 7 is provided on the inside of the rear surface of the MFP 1. A control unit 8, such as a main CPU, which controls the entirety of the MFP 1, and a wireless LAN module 9, are mounted on the control board 7. The main antenna 5 and sub-antenna 6 are connected to the wireless LAN module 9.

Next, as regards the above-described structure, the setting of the antennas according to a first embodiment of the invention is described.

In the case of the MFP 1, the front side is occupied by the sheet cassettes 2, a jam process access path, etc. Due to such constraints on the arrangement of structural components, the control board 7 is disposed on the inside of the rear surface, as mentioned above.

In order to maintain gains of the main antenna 5 and sub-antenna 6, it is necessary to suppress the amount of attenuation that occurs due to the length of the cable connected to the wireless LAN module 9.

Hence, in the first embodiment, the main antenna 5 and sub-antenna 6 are disposed on the rear surface of the MFP 1, thereby to prevent an increase in length of the cable that is connected to the control board 7. Thereby, the length of the cable is reduced to a minimum.

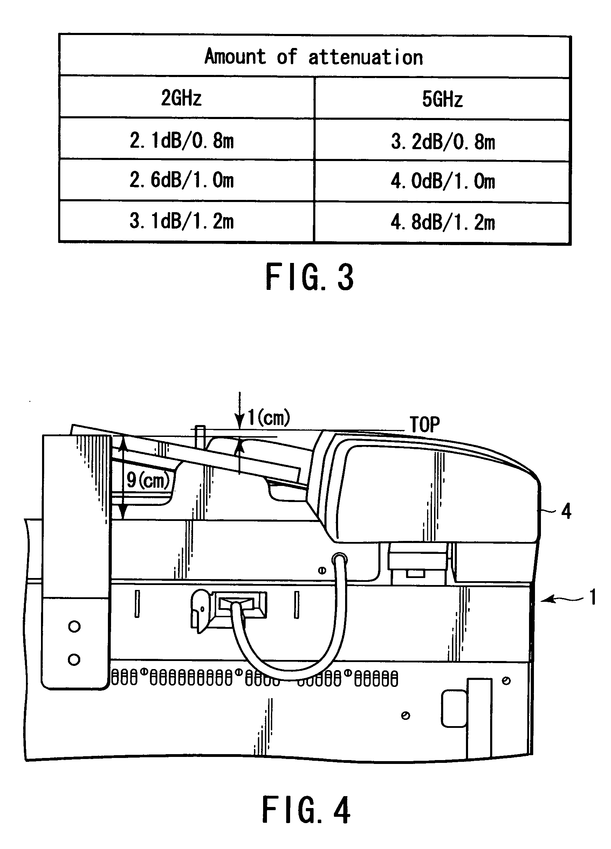

FIG. 3 shows an example of amounts of attenuation in relation to the length of the cable. In the case of 2 GHz, the amount of attenuation is 2.1 dB when the cable length is 0.8 m, the amount of attenuation is 2.6 dB when the cable length is 1.0 m, and the amount of attenuation is 3.1 dB when the cable length is 1.2 m. In the case of 5 GHz, the amount of attenuation is 3.2 dB when the cable length is 0.8 m, the amount of attenuation is 4.0 dB when the cable length is 1.0 m, and the amount of attenuation is 4.8 dB when the cable length is 1.2 m.

As has been described above, according to the first embodiment, since the control board 7 with the wireless LAN module 9 is provided on the rear side, the main antenna 5 and sub-antenna 6 are provided on the rear surface of the MFP 1 and the amount of attenuation due to the length of the connection cable can be minimized.

By providing the main antenna 5 and sub-antenna 6 on the rear surface of the MFP 1, the guideline for dosage of electromagnetic energy emitted by the wireless equipment (i.e. 22 cm or more of distance between the wireless equipment and the operator) can be observed. In other words, since the main antenna 5 and sub-antenna 6 are provided on the rear surface of the MFP 1, a predetermined distance can be secured from the operation panel 3 of the MFP 1, which the user operates directly.

The condition for installing the antennas according to a second embodiment of the invention is described.

FIG. 4 shows an external appearance of an upper part of the MFP 1, as viewed from the rear side of MFP 1.

As regards the condition for installation of antennas on the rear surface of the MFP 1, the casing itself becomes an obstacle for radiation if the antennas are installed anywhere within the casing (in a direction toward the front surface of MFP 1).

In the second embodiment, the condition for installation of the main antenna 5 and sub-antenna 6 in the height direction is optimized.

It was confirmed, as a result of measurement, that in the case where the reversing automatic document feeder (RADF) 4 is mounted, if the main antenna 5 and sub-antenna 6 are installed at a position higher than a position that is lower by 1 cm than the uppermost part of the RADF 4, the degradation in performance of the main antenna 5 and sub-antenna 6 is small.

As has been described above, according to the second embodiment, in the case where the reversing automatic document feeder (RADF) 4 is mounted, degradation in performance of the antennas can be prevented by installing them at a position higher than a position that is lower by 1 cm than the uppermost part of the RADF.

The condition for installation of the main antenna and sub-antenna according to a third embodiment of the invention is described.

As regards the reversing automatic document feeder (RADF) 4, a mechanism section 4a for feeding and reversing paper sheets is disposed on the left side of the MFP 1, as viewed from the front side (see FIG. 1). Since the mechanism section 4a itself is an obstacle to radiation, the main antenna 5 is disposed on a side opposite to the rear surface of the mechanism section 4a, whereby the radiation characteristics are improved (see FIGS. 1 and 2).

However, in a case where the main antenna 5 is disposed on the right side of the rear surface of the operation panel 3, the mechanism section 4a also becomes an obstacle to radiation, and the radiation characteristics are degraded.

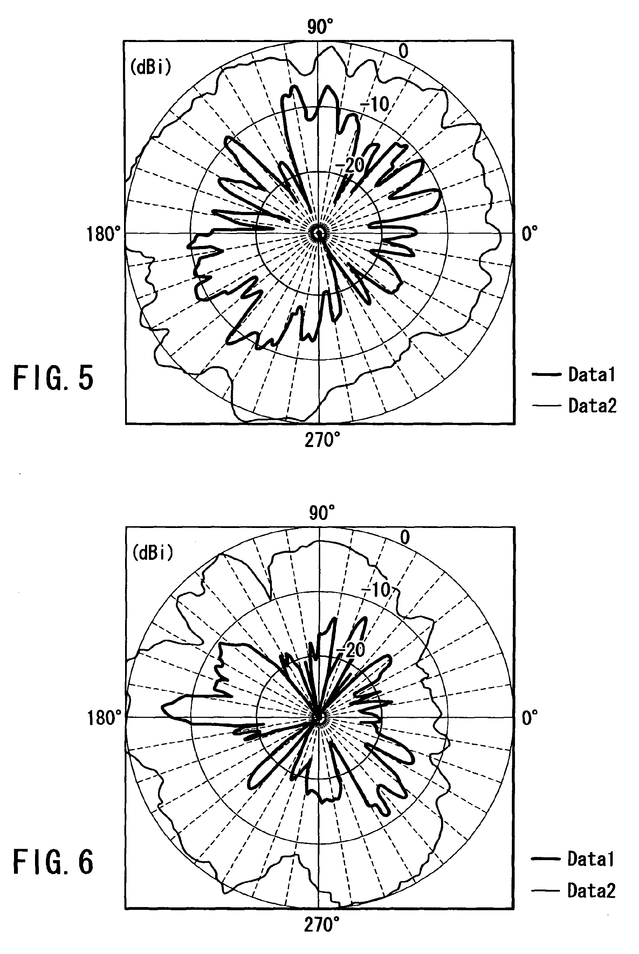

FIG. 5 shows radiation characteristics of the main antenna 5. Data 1 indicates horizontal radiation characteristics, and Data 2 vertical radiation characteristics. The radiation characteristics of the main antenna 5 are illustrated such that front side of the MFP 1 is set at zero degree, the right side is set at 90 degrees, the rear side is set at 180 degrees, and the left side is set at 270 degrees. As is understood from FIG. 5, the characteristics in a range between about 270 degrees and about 315 degrees are degraded.

The sub-antenna 6 is disposed at such a position as to be able to cover the range associated with the degradation in characteristics, thereby compensating the degraded radiation characteristics.

FIG. 6 shows radiation characteristics of the sub-antenna 6. Data 1 indicates horizontal radiation characteristics, and Data 2 vertical radiation characteristics. Like FIG. 5, the radiation characteristics of the sub-antenna 6 are illustrated such that front side of the MFP 1 is set at zero degree, the right side is set at 90 degrees, the rear side is set at 180 degrees, and the left side is set at 270 degrees. As is understood from FIG. 6, the degraded characteristics of the main antenna 5 in the range between about 270 degrees and about 315 degrees are compensated.

As has been described above, according to the third embodiment, the sub-antenna 6, as well as the main antenna 5, is provided. Thereby, degradation in radiation characteristics is suppressed.

A fourth embodiment of the present invention will now be described.

In a case where a Bluetooth function is provided along with the above-described wireless LAN function, interference occurs when these communication functions are used at the same time. The fourth embodiment aims to optimize the condition for installation of antennas so as to minimize the interference due to the same-time communications using the Bluetooth function and wireless LAN function.

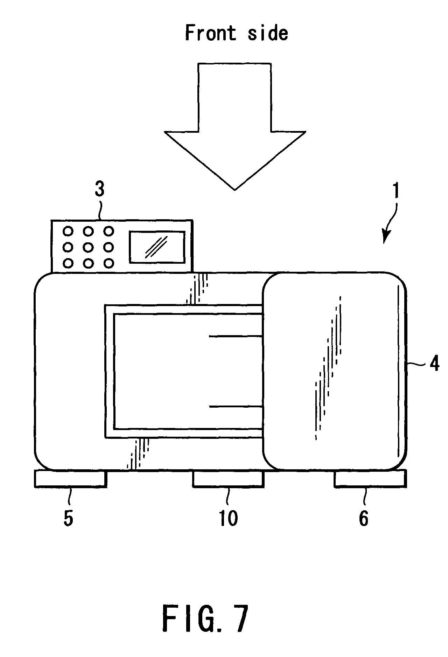

FIG. 7 shows an external structure of the MFP 1, as viewed from above. The front side of the MFP 1 is indicated by an arrow in FIG. 7. The rear surface of the MFP 1 is provided with the main antenna 5, sub-antenna 6 and a Bluetooth antenna 10 that is used for the Bluetooth function. The interval between the antennas is set at 200 mm or more.

According to the fourth embodiment, the Bluetooth antenna 10 is disposed between the main antenna 5 and sub-antenna 6. Thereby, it becomes possible to suppress the adverse effect of interference due to same-time communications using the Bluetooth function and wireless LAN function.

## Claims

1. An image forming apparatus **characterized by** comprising:
a main body (1) of the image forming apparatus;
a wireless LAN module (9) that is provided inside a rear surface of the main body of the image forming apparatus;
an antenna (5, 6) that is provided on the rear surface of the main body of the image forming apparatus; and
a cable that connects the wireless LAN module (9) and the antenna (5, 6) with a shortest distance.

2. The image forming apparatus according to claim 1, **characterized in that** the wireless LAN module is provided on a control board (7) that is disposed inside the rear surface of the main body of the image forming apparatus.

3. The image forming apparatus according to claim 1, **characterized in that** the antenna comprises a main antenna (5) and a sub-antenna (6).

4. The image forming apparatus according to claim 1, **characterized in that** the antenna comprises a dual-band antenna.

5. An image forming apparatus with an automatic document feeder, **characterized by** comprising:
a wireless LAN module (9) that is provided inside a rear surface of a main body of the image forming apparatus; and
an uppermost part of an antenna (5, 6) that is connected to the wireless LAN module and is provided on the rear surface of the main body of the image forming apparatus, the uppermost part of the antenna being located at a position higher than a predetermined position relative to an uppermost part of the automatic document feeder (4).

6. The image forming apparatus according to claim 5, **characterized in that** the uppermost part of the antenna is located at a position higher than a position that is lower by 1 cm than the uppermost part of the automatic document feeder.

7. An image forming apparatus with an automatic document feeder, **characterized by** comprising:
a wireless LAN module (9) that is provided inside a rear surface of a main body of the image forming apparatus;
a main antenna (5) that is connected to the wireless LAN module and is provided on the rear surface of the main body of the image forming apparatus, the main antenna being located at a position where optimal radiation characteristics are obtained in consideration of the presence of the automatic document feeder that is an obstacle to a front side of the image forming apparatus; and
a sub-antenna (6) that is connected to the wireless LAN module and is provided on the rear surface of the main body of the image forming apparatus.

8. The image forming apparatus according to claim 7, **characterized in that** an uppermost part of the main antenna is provided on that part of the rear surface of the image forming apparatus, which corresponds to a right side of the front surface of the image forming apparatus, at a position that is lower by 1 cm than an uppermost part of the automatic document feeder.

9. The image forming apparatus according to claim 7, **characterized in that** the sub-antenna (6) is provided at such a position as to compensate a degraded portion of radiation characteristics of the main antenna (5).

10. The image forming apparatus according to claim 7, **characterized in that** an uppermost part of the sub-antenna (6) is provided on that part of the rear surface of the image forming apparatus, which corresponds to a left side of the front surface of the image forming apparatus, at a position that is lower by 1 cm than an uppermost part of the automatic document feeder (4).

11. The image forming apparatus according to claim 7, **characterized by** further comprising an antenna (5) for Bluetooth, which is disposed between the main antenna and the sub-antenna (6), with a predetermined distance from the main antenna (5) and a predetermined distance from the sub-antenna (6).

12. The image forming apparatus according to claim 11, **characterized in that** the antenna for Bluetooth is disposed with a distance of 200 mm or more from the main antenna (5) and with a distance of 200 mm or more from the sub-antenna (6).
